# NEUE EUROPÄISCHE PATENTSCHRIFT

(11) **EP 2 463 635 B2**
(45) Veröffentlichungstag und Bekanntmachung des Hinweises auf die Entscheidung über den Einspruch: **06.01.2016**
(45) Hinweis auf die Patenterteilung: 27.03.2013
(21) Anmeldenummer: 10015383.2
(22) Anmeldetag: 07.12.2010
(51) Int. Cl.: G01L 9/00

(54) **Druckmesszelle**
Pressure measurement cell
Cellule de mesure de pression

(43) Veröffentlichungstag der Anmeldung: 13.06.2012
(73) Patentinhaber: VEGA Grieshaber KG, 77709 Wolfach (DE)
(72) Erfinder: Jacob, Jörn, 77709 Kirnbach (DE); Mellert, Martin, 77790 Steinach (DE); Fehrenbach, Josef, 77716 Haslach (DE); Deck, Thomas, 77709 Wolfach (DE); Kopp, Thomas, 77709 Wolfach (DE)
(74) Vertreter: Westphal, Mussgnug & Partner Patentanwälte mbB

(56) Entgegenhaltungen:
- EP-A1- 0 569 899
- US-A- 4 703 658

## Beschreibung

Die Erfindung betrifft eine Druckmesszelle, insbesondere eine Relativdruckmesszelle zum Messen eines Messdrucks mit einem wenigstens eine Grundkörperelektrode aufweisenden Grundkörper sowie mit einem mit dem Grundkörper unter Ausbildung einer Sensorkammer verbundenen Membrankörper gemäß Oberbegriff des Patentanspruchs 1.

Ein Relativdrucksensor dient zur Messung des Differenzdruckes zwischen dem Druck in einem Messmedium und dem aktuellen Atmosphärendruck. Ein solcher Relativdrucksensor ist aus einem Grundkörper aufgebaut, der zusammen mit einer randseitig mit demselben verbundenen Messmembran eine Sensorkammer bzw. Druckkammer ausbildet. Zur Relativdruckmessung wird die Referenzluft über eine grundkörperseitige Belüftungsöffnung in die Sensorkammer geleitet, dabei wird die der Sensorkammer abgewandte Oberfläche der Messmembran mit dem Messdruck beaufschlagt. Die hierdurch bewirkte Verformung der Messmembran ist ein Maß für den Relativdruck, welches in ein Messsignal umgesetzt wird.

Keramisch-kapazitive Druckmesszellen werden aus einem Grundkörper-Sinterkörper und einem Membran-Sinterkörper randseitig mittels eines Abstandshalters miteinander verlötet oder hartverlötet, so dass eine Sensorkammer entsteht. Das verwendete Lot oder das Aktivhartlot, bspw. Glasfritte dient dabei selbst als Abstandshalter.

Vor dem Fügen von Grundkörper und Membrankörper werden auf deren Oberflächen, die die Kammerwände der Sensorkammer bilden, Grundkörperelektroden und eine Membranelektrode aufgebracht, üblicherweise durch Aufsputtern von Tantal.

Durch die Zufuhr der Referenzluft über die Belüftungsöffnung gelangt Feuchte in die Sensorkammer, die bei Unterschreitung des Taupunkts dort kondensiert und damit die Funktion beeinträchtigen kann. Durch die Anlagerung von Wasser wird die Dielektrizitätskonstante der wirksamen Elektrodenflächen beeinflusst, wodurch es zu einem Offset des Nullpunkts des Drucksensors kommt.

Um die Toleranz gegenüber Feuchtigkeit zu verbessern, wird gemäß der EP 1 061 351 A1 vorgeschlagen, die inneren Oberflächen der Sensorkammer einer solchen Druckmesszelle ganzflächig mit einem hydrophoben Material zu beschichten, wobei bevorzugt Silane verwendet werden. Da solche Beschichtungen aus Silane organisch sind, ist deren Temperatureinsatzbereich begrenzt. Ein weiterer Nachteil besteht darin, dass solche Beschichtungen aufgrund der Temperaturbeschränkungen erst nach der Fügung von Membran und Grundkörper mittels Vakuum durch die Belüftungöffnung im Grundkörper erzeugt werden können, d. h. ein hoher fertigungstechnischer Aufwand hierzu erforderlich ist.

Ein ähnliches Verfahren zur weiteren Verbesserung der Toleranz gegenüber Feuchtigkeit beschreibt die DE 101 63 567 A1, bei dem ebenso die Sensorkammer mit einer hydrophoben Beschichtung aus Silane versehen wird, jedoch wird diese Schicht mittels eines CVD-Verfahrens (chemisches Epitaxieverfahren) erzeugt, indem diese über die Belüftungsöffnung auf die Wände der Sensorkammer abgeschieden werden. Da es sich hierbei ebenso um ein Vakuumverfahren handelt, ist der Aufwand sehr groß und das Ergebnis einer gleichmäßigen Schichtabscheidung nur schwer zu kontrollieren. Zudem sind die sich dabei ergebenden Schichten aus Silane-Verbindungen ebenfalls nicht hochtemperaturbeständig.

In der EP 0 563 899 wird das Aufbringen von Silikondioxid auf die Messkammerwände mittels Plasma CVD beschrieben, ebenfalls eine sehr aufwändige Technologie.

Als weiterer Stand der Technik wird die DE 10 2007 026 243 A1 genannt.

Die Aufgabe der Erfindung besteht darin, eine Druckmesszelle der eingangs genannten Art mit einer Schutzschicht im Inneren derart weiterzuentwickeln, welche die negativen elektrischen Auswirkungen bei Anlagerung von Wassermolekülen weitestgehend vermeidet, einfach herzustellen ist und die oben genannten Nachteile hinsichtlich der Schutzschicht vermeidet.

Diese Aufgabe wird gelöst durch eine Druckmesszelle mit den Merkmalen des Patentanspruchs 1.

Eine solche Druckmesszelle, insbesondere Relativdruckmesszelle zum Messen eines Messdrucks, zeichnet sich dadurch aus, dass sowohl die von dem Grundkörper gebildete Wand der Sensorkammer als auch die von dem Membrankörper gebildete Wand der Sensorkammer mit einer Schutzschicht bedeckt ist, welche erfindungsgemäß als Glasschicht ausgebildet ist.

Die Wirkung von auf diesen Glasschichten sich anlagernden Wassermolekülen ist stark reduziert, haben also keinen wesentlichen Einfluss auf die Kapazitäten der Messzelle, da die Elektroden vollständig gegeneinander isoliert sind und es auch durch die Wasseranlagerungen nicht zu Nebenschlüssen kommen kann und somit eine Beeinflussung der Impedanzen des Gesamtsystems der Messzelle weitestgehende ausgeschlossen wird.

Eine solche sowohl den Grundkörper als auch den Membrankörper passivierende Glasschicht ist hochtemperaturbeständig und dennoch einfach zu realisieren, da deren Herstellung vor dem Zusammenfügen des Grundkörpers mit dem Membrankörper zu einer vollständigen Messzelle durchgeführt wird.

Ferner wird mit einer solchen erfindungsgemäßen Glasschicht ein guter Feuchteschutz und gleichzeitig auch ein mechanischer Schutz der Elektroden erzielt, da insbesondere im Überlastfall verhindert wird, dass die Elektroden aneinander reiben und dadurch ein Lösen von Partikeln aus den Elektroden unterbleibt.

Erfindungsgemäß wird die gesamte Oberfläche des Grundkörpers, auf der die wenigstens eine Grundkörperelektrode ausgebildet ist, mit der Glasschicht bedeckt und in gleicher Weise auch die gesamte Oberfläche des Membrankörpers, auf der die Membranelektrode ausgebildet ist.

Damit wird dieser Herstellungsprozess zum Abscheiden der Glasschicht auf den mit den Elektroden versehenen Oberflächen des Grundkörpers und des Membrankörpers wesentlich vereinfacht, da hierzu keine Strukturierung dieser Oberflächen erforderlich ist.

Besonders vorteilhaft ist es gemäß einer Weiterbildung der Erfindung, wenn der Grundkörper und der Membrankörper randseitig mittels eines als Glaslot hergestellten Abstandshalters miteinander verbunden sind. Denn durch die Verbindung des Grundkörpers und des Membrankörpers mittels des Glaslotes ergibt sich eine komplette Glaskapselung im Innenraum der Messzelle. Besonders vorteilhaft ist es, wenn gemäß einer Ausgestaltung der Erfindung die Druckmesszelle als Relativdruckmesszelle ausgebildet ist, wobei die Sensorkammer eine Belüftungsöffnung aufweist, über welche sie mit einem Referenzdruck beaufschlagbar ist.

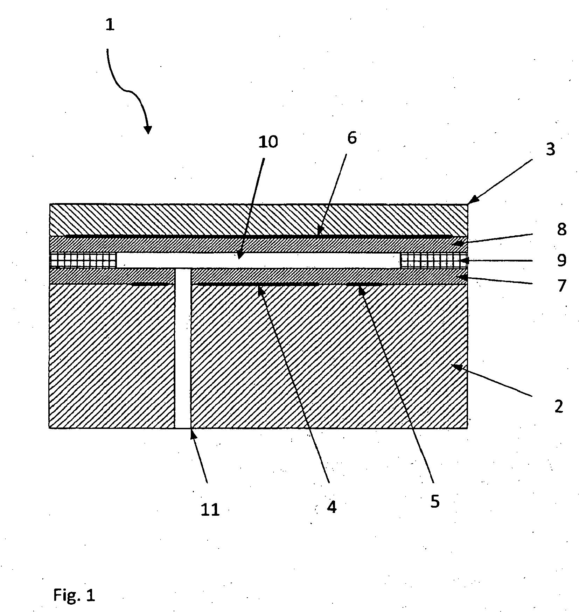

Die Erfindung wird nachfolgend anhand eines Ausführungsbeispiels unter Bezugnahme auf eine einzige Figur ausführlich beschrieben. Diese Figur 1 zeigt eine schematische Schnittdarstellung eines Ausführungsbeispiels einer erfindungsgemäßen Relativdruckmesszelle.

Die in Figur 1 dargestellte Relativdruckmesszelle 1 ist als keramisch-kapazitiver Drucksensor ausgebildet. Als keramisches Material wird bspw. Aluminiumoxid verwendet. Die Relativdruckmesszelle 1 umfasst einen Grundkörper 2, die als kreisrunde Scheibe mit planparallelen Oberflächen ausgebildet ist, und einen Membrankörper 3, der eine an den Durchmesser des Grundkörpers 2 angepasste kreisrunde Form aufweist, dessen Dicke jedoch wesentlich geringer ist als die Dicke des Grundkörpers 2, da die dem Grundkörper 2 abgewandte Oberfläche des Membrankörpers 3 mit einem Messdruck beaufschlagt wird und daher dieser Membrankörper 3 verformbar sein muss.

Direkt auf dem Grundkörper 2 sind eine Messelektrode 4 und eine Referenzelektrode 5 als Grundkörperelektroden angeordnet, entsprechend ist die dem Grundkörper 2 benachbarten Oberfläche des Membrankörpers 3 mit einer Membranelektrode 6 versehen. Die Messelektrode 4 ist im Wesentlichen kreisförmig mittig auf der Oberfläche des Grundkörpers 2 angeordnet und wird von der beabstandet angeordneten kreisringförmigen Referenzelektrode 5 umschlossen. Die Membranelektrode 6 bedeckt annähernd bis auf einen umlaufenden schmalen Randbereich die gesamte Oberfläche des Membrankörpers 3.

Die mit den Elektroden 4 und 5 bzw. 6 versehenen Oberflächen des Grundkörpers 2 und des Membrankörpers 3 werden mit einer dünnen Glasschicht 7 bzw. 8 beschichtet. Diese Schichten 7 und 8 werden vor einer Sinterung mittels eines atmosphärischen Hochtemperaturprozesses mit einem gängigen Verfahren, bspw. Tampondruck oder Siebdruck auf die Oberflächen aufgetragen. Mit dieser Sinterung werden dichte und sehr feste Glasschichten 7 und 8 erzielt. Als Material für diese Schichten 7 und 8 wird bspw. handelsübliche Glaspasten verwendet.

Nachdem der Grundkörper 2 mit einer Belüftungsöffnung 11 versehen ist, werden die derart mit den Glasschichten 7 und 8 vorbereiteten Grund- und Membrankörper 2 bzw. 3 zur Bildung einer Sensorkammer 10 mit den die Elektroden 4 und 5 bzw. 6 aufweisenden und einander zugewandten Oberflächen unter Einfügung eines randseitig umlaufenden Glas-Abstandshalters 9 hartverlötet, wobei das verwendete Glaslot, bspw. eine Glasfritte selbst als Abstandshalter dient. Die dadurch sich ergebende Verbindung zwischen diesem Abstandshalter 9 und den Glasschichten 7 und 8 führt zu einer vollständigen Glaskapselung der Sensorkammer 10. Die Belüftungsöffnung 11 reicht dabei von der dem Membrankörper 3 abgewandten Oberfläche des Grundkörpers 2 bis in die Glasschicht 7 und verbindet damit die Sensorkammer 10 mit der äußeren Atmosphäre.

Eine solche erfindungsgemäße Druckmesszelle 1 reagiert im Vergleich zu aus dem Stand der Technik bekannten Druckmesszellen erheblich weniger, insbesondere hinsichtlich des elektrischen Verhaltens auf feuchte Umgebungsbedingungen und eine damit verbundene Kondensatbildung im Inneren bzw. in der Sensorkammer 10.

### Bezugszeichenliste

1 Druckmesszelle, Relativdruckmesszelle
2 Grundkörper
3 Membrankörper
4 Grundkörperelektrode, Messelektrode des Grundkörpers 2
5 Grundkörperelektrode, Referenzelektrode des Grundkörpers 2
6 Membranelektrode des Membrankörpers 3
7 Glasschicht
8 Glasschicht
9 Abstandshalter
10 Sensorkammer
11 Belüftungsöffnung

## Patentansprüche

1. Druckmesszelle (1) zum Messen eines Messdrucks, mit einem wenigstens eine Grundkörperelektrode (4, 5) aufweisenden Grundkörper (2) sowie mit einem mit dem Grundkörper (2) unter Ausbildung einer Sensorkammer (10) verbundenen Membrankörper (3), welcher wenigstens eine Membranelektrode (6) aufweist und mit einem unter dem Messdruck stehenden Medium druckbeaufschlagbar ist, wobei sowohl die von dem Grundkörper (2) gebildete Wand der Sensorkammer (10) als auch die von dem Membrankörper (3) gebildete Wand der Sensorkammer (10) mit einer Schutzschicht (7, 8) bedeckt ist,
wobei
die Schutzschicht (7, 8) als Glasschicht ausgebildet ist, **dadurch gekennzeichnet, dass**
die gesamte Oberfläche des Grundkörpers (2), auf dem die wenigstens eine Grundkörperelektrode (4, 5) ausgebildet ist, mit der Glasschicht (7) bedeckt ist,
wobei die gesamte Oberfläche des Membrankörpers (3), auf dem die Membranelektrode (6) ausgebildet ist, mit der Glasschicht (8) bedeckt ist.

2. Druckmesszelle (1) nach Anspruch 1, 2 oder 3,
**dadurch gekennzeichnet, dass** der Grundkörper (2) und der Membrankörper (3) randseitig mittels eines als Glaslot hergestellten Abstandshalters (9) miteinander verbunden sind.

3. Druckmesszelle (1) nach einem der vorhergehenden Ansprüche,
**dadurch gekennzeichnet, dass** die Druckmesszelle (1) als Relativdruckmesszelle ausgebildet ist, wobei die Sensorkammer (10) eine Belüftungsöffnung (11) aufweist, über welche sie mit einem Referenzdruck beaufschlagbar ist.

## Claims

1. A pressure measurement cell (1) for measuring a measurement pressure, with a main body (2) having at least one main body electrode (4, 5) and with a diaphragm body (3) which is connected to the main body (2) so as to form a sensor chamber (10) and which has at least one diaphragm electrode (6) and is capable of being acted upon with pressure by a medium under the measurement pressure, wherein both the wall of the sensor chamber (10) formed by the main body (2) and the wall of the sensor chamber (10) formed by the diaphragm body (3) [are] covered with a protective layer (7, 8), wherein the protective layer (7, 8) is designed in the form of a glass layer, wherein the entire surface of the main body (2) on which the at least one main body electrode (4, 5) is formed is covered with the glass layer (7), wherein the entire surface of the diaphragm body (3) on which the diaphragm electrode (6) is formed is covered with the glass layer (6).

2. A pressure measurement cell (1) according to claim 1, 2 or 3, **characterized in that** the main body (2) and the diaphragm body (3) are connected to each other at the edge by means of a spacer member (9) produced in the form of glass solder.

3. A pressure measurement cell (1) according to any one of the preceding claims, **characterized in that** the pressure measurement cell (1) is designed in the form of a relative pressure measurement cell, wherein the sensor chamber (10) has an aerating opening (11) by way of which it is capable of being acted upon with a reference pressure.

## Revendications

1. Cellule manométrique (1) pour mesurer une pression de mesure, comportant un corps de base (2) muni d'au moins une électrode de corps de base (4, 5) ainsi qu'un corps de membrane (3) relié au corps de base (2) en formant une chambre de capteur (10), comportant au moins une électrode de membrane (6), et peut être sollicité en pression par un fluide se trouvant sous une pression inférieure à la pression de mesure, la paroi de la chambre de capteur (10) formée par le corps de base (2) ainsi que la paroi de la chambre de capteur (10) formée par le corps de membrane (3) étant recouvertes d'une couche de protection (7, 8),
la couche de protection (7, 8) étant réalisée sous la forme d'une couche de verre, la totalité de la surface du corps de base (2) sur laquelle est formée l'électrode de corps de base (4, 5) étant recouverte par la couche de verre (7), la totalité de la surface du corps de membrane (3) sur laquelle est formée l'électrode de membrane (6) étant recouverte par la couche de verre (8).

2. Cellule manométrique (1) conforme à la revendication 1, 2 ou 3,
**caractérisée en ce que**
le corps de base (2) et le corps de membrane (3) sont reliés sur leurs bords par un élément d'espacement (9) réalisé sous la forme d'une soudure en verre.

3. Cellule manométrique (1) conforme à l'une des revendications précédentes,
**caractérisée en ce qu'**
elle est réalisée sous la forme d'une cellule de mesure de pression relative, la chambre de capteur (10) comportant une ouverture d'aération (11) par laquelle elle peut être sollicitée par une pression de référence,
